# EUROPEAN PATENT APPLICATION

(11) **EP 1 617 629 A1**
(43) Date of publication of application: **18.01.2006**
(21) Application number: 04817232.4
(22) Date of filing: 14.10.2004
(51) Int. Cl.: H04M 1/00, H04B 7/26, G06F 3/033, A63F 13/06

(54) **EXTERNAL DEVICE FOR MOBILE COMMUNICATION TERMINAL, MOBILE COMMUNICATION TERMINAL, AND EXTERNAL DISPLAY SYSTEM FOR MOBILE COMMUNICATION TERMINAL**

(30) Priority: 16.10.2003 JP 2003356867; 09.07.2004 JP 2004202606
(71) Applicant: Vodafone K.K., Minato-ku, Tokyo 1056205 (JP)
(72) Inventor: KUSUDA, Hirohisa, c/o Vodafone K.K., Tokyo 1056205 (JP); NISHIDE, Yasuhiro, c/o Vodafone K.K., Tokyo 1056205 (JP); TSUJINO, Daisuke, c/o Vodafone K.K., Tokyo 1056205 (JP); YAMAZAKI, Jun,2c/o Vodafone K.K., Tokyo 1056205 (JP); KATAYAMA, Takashi, Ashiya-shi, Hyougo 659-0084 (JP); NISHIKATA, Naomi, Shizuoka 418-0013 (JP); MIZUNO, Takahisa, Shizuoka 431-3112 (JP); IKEDA, Hideyuki, Yokohama-shi, Kanagawa 230-0012 (JP)
(74) Representative: Grünecker, Kinkeldey, Stockmair & Schwanhäusser Anwaltssozietät
(86) International application number: PCT/JP2004/015158
(87) International publication number: WO 2005/039155

(57) **Abstract**

The present invention provides an external apparatus for mobile communication terminal, a mobile communication terminal, and an extemal display systems for mobile communication terminal by which application programs using detection means can be executed in a main body of a mobile communication terminal without raising the cost of the main body.

The external apparatus 30 for mobile communication terminal is comprised of a sensor detection unit (detection means) 312 and a communication control unit (data transmission means) 311. The sensor detection unit 312 detects at least one of position, direction, attitude and movement of the external apparatus 30 for mobile communication terminal. The communication control unit 311 sends detection result data acquired based on detection results by the sensor detection unit 312 to the mobile communication terminal by wired or wireless non-public short-range communication.

## Description

### Technical Field

The present invention relates to an external apparatus for mobile communication terminal, a mobile communication terminal having this apparatus such as mobile phones capable of executing application programs, and an external display system for mobile communication terminal.

### Background Art

In the past, mobile phones capable of executing application programs written in object-oriented programming languages which are independent of platforms are well known for this kind of mobile communication terminal. For example, a mobile phone installed with JAVA (Trademark) virtual machine functions in order to execute application programs written in JAVA (Trademark) is well known (refer to Patent Document 1). Such mobile phones are able to utilize various application programs obtained e.g. by downloading from predetermined servers. It is the same for application programs executing in a BREW (Trademark) application execution environment.

Patent Document 2 discloses a mobile phone comprising a sensor ("detection means") to detect acceleration or angular velocity. This mobile phone is able to display data related to acceleration or angular velocity detected by the sensor on display means. Patent Document 3 discloses a mobile phone comprising a sensor (detection means) to detect acceleration. This mobile phone is able to calculate its trajectory by using acceleration detected by the sensor, and to recognize the trajectory as input characters. Patent Document 4 discloses a mobile phone comprising a geomagnetic sensor (detection means) to detect bearing. On this mobile phone, two or more bearings are associated with numeric values, and it is possible to input numeric values by directing the mobile phone body to a specific bearing.
The mobile phones described in the Patent Document 2, 3 and 4, are capable of detecting position, direction, attitude or movement of the mobile phones based on the sensor detection results. There is no specific description concerning control of such kinds of sensors in the patent documents. However, they may be controlled by phone platforms. Also, there is no specific description concerning a storage location of data such as acceleration detected by various kinds of sensors in the patent documents. However the storage location is typically a platform memory area controlled by the phone platform. Accordingly, it is thought that in conventional mobile phones, the application program utilizing data such as acceleration ("detection result data") stored in the platform memory area works directly on the phone platform controlling the memory area, and depends on the phone platform.
Patent Document 1: Japanese Unexamined Patent Application Publication No. 2000-347867
Patent Document 2: Japanese Unexamined Patent Application Publication No. 2001-272413
Patent Document 3: Japanese Unexamined Patent Application Publication No. 2002-169645
Patent Document 4: Japanese Unexamined Patent Application Publication No. 2003-111142

### Disclosure of the Invention

### Problem to be Solved by the Invention

In mobile phones described in the Patent Document 2, 3 and 4, the sensors are built into the mobile phones. The sensors built into the mobile phones cause an increase in the cost of the mobile phones because the sensors are desirable to be small. On the other hand, by using the detection results of such sensor, it becomes possible to provide various application programs on the mobile phones for users. However, some users do not desire to use such application programs. Therefore, for the mobile phones in which low cost is strongly desired, it is difficult to practically build the sensors raising the cost of the mobile phone in all mobile phones.
The above explanation is given by taking mobile phones for example, however, it is the same for other mobile communication terminals.

The present invention has been accomplished in view of above-described background. An object of the present invention is to provide an external apparatus for mobile communication terminal, a mobile communication terminal, and an external display system for mobile communication terminal, by which application programs using detection means can be executed on the main body of the mobile communication terminal without raising the cost of the main body.

### Means for Solving the Problems

To achieved the object, an external apparatus for mobile communication terminal according to the present invention is characterized in comprising detection means for detecting at least one of position, direction, attitude and movement of the external apparatus, and data transmission means for transmitting detection result data acquired based on detection results by the detection means to the mobile communication terminal by wired or wireless non-public short-range communication.
In this external apparatus for mobile communication terminal, it is possible to transmit the detection result data acquired by the detection means to the mobile communication terminal. Accordingly, in this mobile communication terminal, even if the detection means is not built into the mobile communication terminal, it is possible to execute an application program that performs a process using the detection result data. Also, the present external apparatus exists separately from the mobile communication terminal, so that it can be sold separately from the mobile communication terminal, and users can purchase the external apparatus separately from the mobile communication terminal. Therefore, only users who want to use the application program that performs a process using the detection result data may purchase the present external apparatus.

Furthermore, in the external apparatus for mobile communication terminal, the detection means preferably includes angle detection means for detecting an angle against the standard angle around a virtual axis leading to a predetermined direction. In this external apparatus for mobile communication terminal, attitude of the mobile communication terminal can be specified, so that it becomes possible to execute various application programs using the attitude of the mobile communication terminal.

Furthermore, in the external apparatus for mobile communication terminal, the detection means preferably includes acceleration detection means for detecting acceleration in a predetermined direction working on the external apparatus. In this external apparatus for mobile communication terminal, position and/or movement of the mobile communication terminal can be specified, so that it becomes possible to execute various application programs using the position and/or movement of the mobile communication terminal.

Furthermore, in the external apparatus for mobile communication terminal, the apparatus is preferably comprised of key operation means having keys operated by users, and the data transmission means preferably transmit the detection result data and key operation signals from the key operation means to the mobile communication terminal by non-public communication with flexible communication cable or wireless non-public communication. In the external apparatus for mobile communication terminal, not only the detection result data but also the key operation signals generated when a user operates the key operation means are transmitted to the mobile communication terminal. Accordingly, at the mobile communication terminal side, application programs can be executed to process using the detection result data and the key operation signals. Furthermore, in this external apparatus, the detection result data and the key operation signals are transmitted by non-public communication with flexible communication cable or wireless non-public communication, so that if a user changes the position, direction, attitude or movement of the device, the position, direction, attitude or movement of the mobile communication terminal will not be changed. Therefore, while the main body of the mobile communication terminal is fixed, the position, direction, attitude or movement of the external apparatus for mobile communication terminal can be changed freely.

Furthermore, in the external apparatus for mobile communication terminal, it can preferably be attached to and removed from a memory card slot provided in the mobile communication terminal. In this external apparatus for mobile communication terminal, the external apparatus can be attached to the memory card slot of the mobile communication terminal in which a memory card can be attached detachably. Therefore, it is not necessary to provide separately a connection port for connecting the external apparatus for mobile communication terminal, in the main body of the mobile communication terminal having the memory card slot.

Moreover, the external apparatus for mobile communication terminal is preferably adapted to be completely received in the memory card slot when the external apparatus is attached to the memory card slot. In this external apparatus for mobile communication terminal, the external apparatus does not protrude outside the mobile communication terminal when attached to the memory card slot, therefore the operationality of the mobile communication terminal to change the position, direction, attitude or movement of the external apparatus is improved.

A mobile communication terminal according to the invention is a mobile communication terminal comprising application program execution means for executing application programs using detection result data acquired based on detection results by detection means for detecting at least one of position, direction, attitude and movement, in the main body of the mobile communication terminal, the mobile communication terminal being characterized by comprising: any of the foregoing external apparatuses for mobile communication terminal having the foregoing detection means and the foregoing data transmission means; and data reception means for receiving the detection result data transmitted from the external apparatus for mobile communication terminal by wired or wireless non-public short-range communication, in the main body of the mobile communication terminal; wherein the application program execution means executes the application programs by using the detection result data received with the data reception means.
In this mobile communication terminal, it is possible to transmit the detection result data acquired by the detection means, which is provided on the external apparatus for mobile communication terminal, to the main body of the mobile communication terminal. Accordingly, in this mobile communication terminal, even if the detection means is not built into the mobile communication terminal, it is possible to execute the application programs performing process by using the detection result data. Also, the external apparatus for mobile communication device exists separately from this mobile communication terminal, so that it can be sold separately from the mobile communication terminal, and users can purchase the external apparatus separately from the mobile communication terminal. Therefore, only users who want to use the application programs performing process by using the detection result data may purchase the external apparatus for mobile communication terminal.

Furthermore, another mobile communication terminal according to the invention is a mobile communication terminal comprising application program execution means for executing application programs using detection result data acquired based on detection results by detection means for detecting at least one of position, direction, attitude and movement, in the main body of the mobile communication terminal, the mobile communication terminal being characterized by comprising: any of the foregoing external apparatuses for mobile communication terminal having the foregoing detection means, the foregoing data transmission means and the foregoing key operation means; and data reception means for receiving the detection result data and the key operation signals transmitted from the external apparatus for mobile communication terminal by non-public communication with flexible communication cable or wireless non-public communication, in the main body of the mobile communication terminal; wherein the application program execution means uses detection result data and key operation signals received by the data reception means and executes a game application program that proceeds in accordance with the detection result data and the key operation signals.
In this mobile communication terminal, it is possible to execute an application program performing process by using the key operation signals when a user operates the key operation means of the external apparatus for mobile communication terminal and the detection result data. Furthermore, in this mobile communication terminal, the detection result data and the key operation signals are received by non-public communication with flexible communication cable or wireless non-public communication, so that the position, direction, attitude or movement of the main body of the mobile communication terminal will not be changed even when the user changes the position, direction, attitude or movement of the external apparatus for mobile communication terminal. Therefore, while the main body of the mobile communication terminal is fixed, the position, direction, attitude or movement of the external apparatus for mobile communication terminal can be changed freely.

Furthermore, another mobile communication terminal according to the invention is a mobile communication terminal comprising application program execution means for executing application programs using detection result data acquired based on detection results by detection means to detect at least one of position, direction, attitude and movement, in the main body of the mobile communication terminal, the mobile communication terminal being characterized by comprising: any of the foregoing external apparatuses for mobile communication terminal; a memory card slot that a memory card can be freely attached to and removed from, in the main body of said mobile communication terminal; and data reception means for receiving the detection result data transmitted from the external apparatus for mobile communication terminal attached to the memory card slot by wired or wireless non-public short-range communication, in the main body of the mobile communication terminal; wherein the application program execution means executes the application programs using the detection result data received with the data reception means.
In this mobile communication terminal, it is possible to attach the external apparatus for mobile communication terminal to the memory card slot on the main body of the mobile communication terminal, which a memory card can be attached to be freely attached to and removed from, and to execute an application program performing process by using the detection result data transmitted from the external apparatus. Therefore, it is not necessary to provide separately a connection port for connecting the external apparatus for mobile communication terminal, in the main body of the mobile communication terminal having the memory card slot.

An external display system for mobile communication terminal according to the invention is an external display system for mobile communication terminal comprising any of foregoing mobile communication terminal and an external display device that displays images based on image signals output from the mobile communication terminal, the external display system for mobile communication terminal being characterized by that the mobile communication terminal is comprised of image output means for outputting image signals for displaying screen images corresponding to contents of the application program executed by the application program execution means, to the external display device.
In this external display system for mobile communication terminal, it is possible to display screen images corresponding to contents of the application program executed in the mobile communication terminal, on the external display device. Generally, mobile communication terminals have restrictions on downsizing; however, external display devices do not have these restrictions. Accordingly, with regard to the external display devices, it is possible to enlarge the image display area compared to the display device built into the mobile communication terminal. Therefore, users can view a larger screen image corresponding to contents of the application programs.

For the "Mobile Communication Terminal", phones capable of executing application programs can be listed, which may be among mobile phones of PDC (Personal Digital Cellular) system, GSM (Global System for Mobile communication) system or TIA (Telecommunications Industry Association) system etc., mobile phones standardized in IMT (International Mobile Telecommunications) - 2000, mobile phones of TD-SCD MA (MC: Multi Carrier) system which is one of TD-SCDMA (Time Division Synchronous Code Division Multiple Access), PHS (Personal Handyphone System) phones, automobile telephones, etc. Also, for this "Mobile Communication Terminal", mobile types of mobile communication terminals without phone functions, such as PDA (Personal Digital Assistance) can be listed as well.

### Effect of the Invention

According to the invention, it is possible to execute application programs that utilize detection means in a main body of a mobile communication terminal without raising the cost for the main body of the mobile communication terminal.

### Brief Description of Drawings

[Fig. 1] Illustration explaining the overall configuration of a mobile communication system that can be utilized by a mobile phone according to the embodiment.
[Fig. 2] Schematic block diagram showing a download server hardware configuration forming the same mobile communication system.
[Fig. 3] Illustration showing the external view of the same mobile phone and coordinates.
[Fig. 4] Schematic block diagram showing the hardware configuration of the same mobile phone.
[Fig. 5] Block diagram showing the extracted main part of the same mobile phone.
[Fig. 6] Illustration showing software configuration in the same mobile phone.
[Fig. 7] Flow chart showing the process flow to execute an application program in a mobile phone according to an operation example 1.
[Fig. 8] Sequence flow chart when executing an application program in the mobile phone in operational example 1.
[Fig. 9] Flow chart showing the process flow to execute an application program in a mobile phone according to an operation example 2.
[Fig. 10] Sequence flow chart when executing an application program in the mobile phone in operational example 2.
[Fig. 11] Illustration showing the external view of an mobile phone and coordinates in variation 1.
[Fig. 12] Schematic block diagram showing the hardware configuration of the same mobile phone.
[Fig. 13] Communication sequence flow chart between the main body of the same mobile phone and a SD card sensor.
[Fig. 14] Illustration showing the overall configuration of a whole system in variation 2.
[Fig. 15] Schematic block diagram showing the hardware configuration of the same mobile phone.

### Explanation of the Symbols

- 10: Mobile Phone Communication Network
- 11: Download Server
- 20, 420, 520: Mobile Phones
- 29: External Connection Port
- 30: External Sensor Apparatus
- 206: Communication Device for Mobile Phone Communication Network
- 207: Communication Device for External Apparatus
- 214: Application Program Execution Management Unit
- 215: Main Control Unit
- 217: Communication Unit for External Apparatus
- 301: Communication Device
- 302: Acceleration Sensor
- 303: Geomagnetic Sensor
- 311: Communication Control Unit
- 312: Sensor Detection Unit
- 408: Host Controller for SD Card
- 429: SD Card Slot
- 430: SD Card Sensor
- 431: SD I/O
- 500: Television Device
- 509: External Interface Device
- 530: Game Controller
- 534: Operation Device

### Best Mode for Carrying Out the Invention

In the following section, one embodiment of the invention is described while referring to the figures.

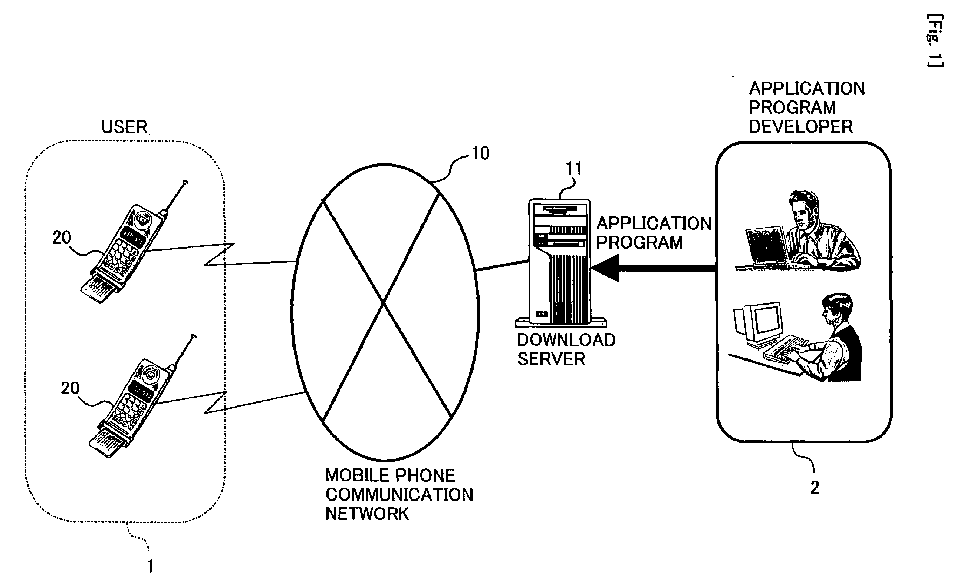

Fig. 1 shows an illustration explaining the overall system configuration of a mobile communication system that can be utilized by a mobile phone as a mobile communication terminal according to the present embodiment.
In this mobile communication system, the mobile phone 20 used by a user 1 has a configuration capable of executing an application program registered by the user 1. In the present embodiment, this application program is developed in platform-independent object-oriented programming. Such application programs include application programs written in JAVA (Trademark) and application programs executing in a BREW (Trademark) application execution environment. This mobile phone 20 can be connected to a mobile phone communication network 10 as a communication network. An application program download server (hereinafter referred to as a "download server") 11 as a server for providing programs is also connected to the mobile phone network 10. When the download server 11 accepts a download request from the mobile phone 20, it sends an application program according to the request to the mobile phone 20.

An application program provided by the download server 11 is offered by the application program developer 2. Specifically, for example, an application program is provided by uploading it to the download server 11 via leased lines or public lines from a personal computer etc. in the application program developer 2. The application program may also be provided by sending recording media, such as optical disks or magnetic disks recording developed application programs, from the application program developer 2 to a communication common carrier which manages and operates the download server 11, so that the application programs in the recording media will be read into the download server 11. The application programs provided in this way are registered to the download server 11 in a downloadable state in which the application program can be downloaded by the mobile phone 20 via the mobile phone network 10.

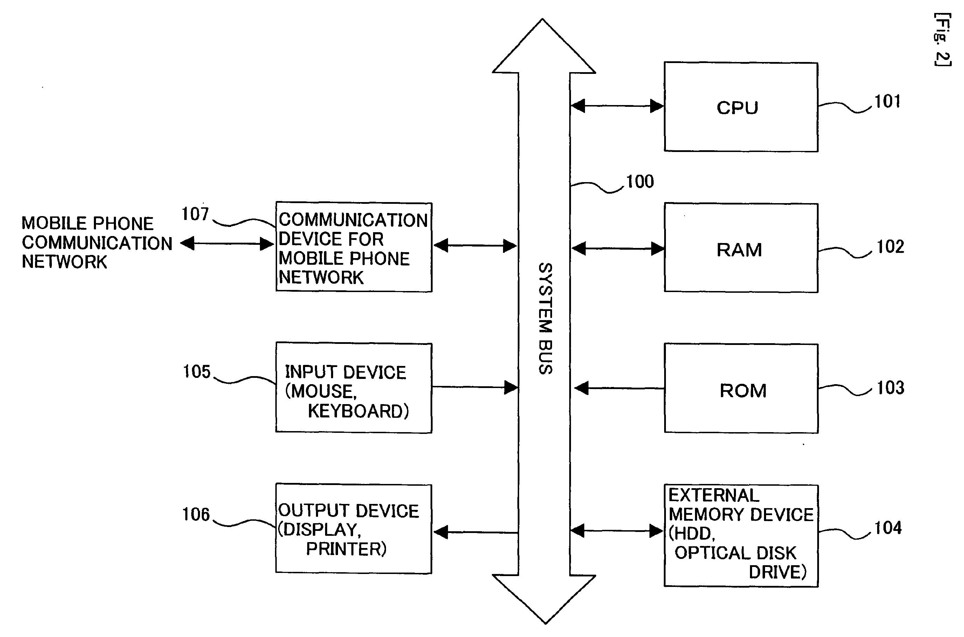

Fig. 2 is a schematic block diagram showing the hardware configuration of the download server 11.
This download server 11 is comprised of a system bus 100, a CPU 101, an internal memory device, an external memory device 104, an input device 105, and an output device 106. The internal memory device is comprised of a RAM 102, a ROM 103 or the like. The external memory is comprised of a hard disk drive (HDD), an optical disk drive or the like. The input device 105 is comprised of an external memory device 104, a mouse, a keyboard or the like. The output device 106 is comprised of a display, a printer or the like. Further, this download server 11 is comprised of a communication device 107 for mobile phone network to communicate with the mobile phone 20 of each user 1 via the mobile phone network 10.
The configuration elements such as the CPU 101 and RAM 102, etc. exchange data and program instructions with each other via the system bus 100. Programs to work the download server 11 according to predetermined procedures are stored in ROM 103 and external memory device 104, and are called up to the working area in CPU 101 and RAM 102 to be executed as necessary. Also, in this download server 11, application programs to be provided to the mobile phone 20 are stored in the external memory device 104. The download server 11 has a function to send application programs stored in the external memory device 104 to the mobile phone 20 via mobile phone network 10, working with CPU 101, RAM 102, and the communication device 107 for mobile phone network, etc., according to the download request from the mobile phone 20. This download server 11 may be configured as a dedicated control device or may be configured using general computer systems. Also, the download server 11 may be configured with one computer or may be configured by networking multiple computers that are responsible for multiple functions respectively.

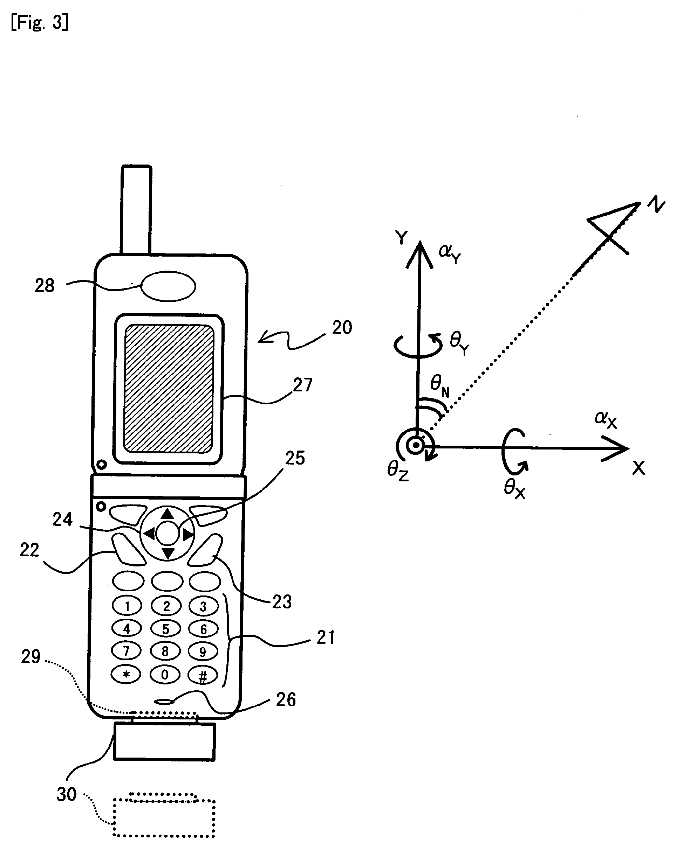

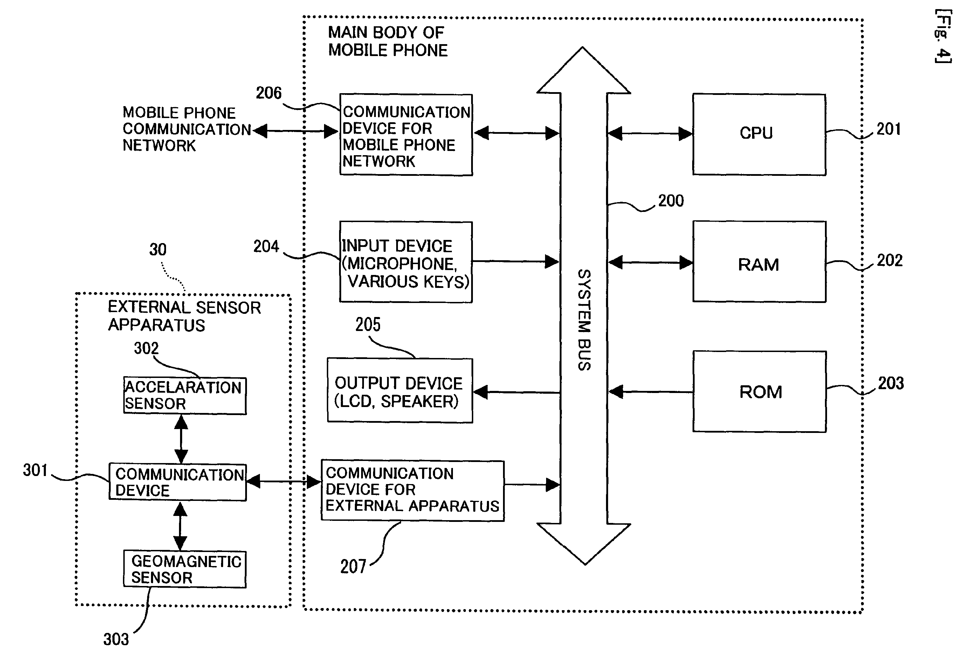

Fig. 3 is an illustration showing the external view of the mobile phone 20 and coordinates. Fig. 4 is a schematic diagram showing hardware configuration of the mobile phone 20.
This mobile phone is a clam-shell (folding) type mobile phone, which is comprised of an internal controller comprising a system bus 200, a CPU 201, a RAM 202 and a ROM 203 etc., an input device 204, an output device 205, a communication device 206 for mobile phone network, and an communication device 207 for external apparatus, in the main body of the mobile phone. The configuration elements such as CPU 201 and RAM 202 etc. exchange various kinds of data and after-mentioned program instructions, etc. with each other via the system bus 200. The input device 204 is comprised of data input keys (ten keys, * key and #key) 21, a call start key 22, a call end key 23, a scroll key 24, a multifunction key 25, and a microphone 26, etc. The output device 205 is comprised of a liquid crystal display (LCD) 27 and a speaker 28, etc. The communication device 206 for mobile phone network is used for communicating with other mobile phones and the download server 11 via the mobile phone network 10. Also, a platform memory area as first memory means controlled by after-mentioned phone platform, and an application memory area as second memory means controlled in after-mentioned application execution environment exist in RAM 202. The communication device 207 for external apparatus is used for data communication with devices connecting to an external connection port 29 that is an input/output port using serial interface, via the port 29.

Furthermore, this mobile phone has an external sensor apparatus 30 as an external apparatus for mobile communication terminal. This external sensor apparatus 30 can be freely attached to and detached from the external connection port 29 provided on the mobile phone body, and in the attached state, the apparatus becomes incorporated as one unit with the mobile phone body. This external sensor apparatus 30 has a communication device 301, an acceleration sensor 302 and a geomagnetic sensor 303. The communication device 301 is for data communication with the mobile phone body via the external connection port 29. In the state of which the external sensor apparatus 30 is attached to the mobile phone body, the acceleration sensor 302 is a 2-axis sensor for detecting the acceleration α_{X} and α_{Y} in two directions (X-axis and Y-axis direction in Fig. 3) which are mutually-perpendicular on a plain parallel to a plain with the data input keys (ten keys, * key, and # key) 21 etc. This acceleration sensor 302 is mounted on the circuit board (not shown) provided inside the external sensor apparatus 30, and a publicly known sensor capable of detecting the acceleration α_{X} and α_{Y} can be used as the sensor 207. The geomagnetic sensor 303 is a 3-axis sensor to detect the direction of geomagnetism on three-dimensional coordinates consisting of the X-axis, the Y-axis, and a Z-axis that is perpendicular to these axes. In the present embodiment, angles θ_{X}, θ_{Y}, and θ_{Z} around the X-axis, the Y-axis and the Z-axis are respectively detected by utilizing the detection results of this geomagnetic sensor 303. Specifically, the variation of the geomagnetism direction changed against a standard geomagnetism direction (standard direction) is detected by using angles θ_{X}, θ_{Y} and θ_{Z} around the X-axis, the Y-axis and the Z-axis. Accordingly, when the mobile phone changes its attitude from the attitude in which the geomagnetic direction is corresponding with the standard direction, the attitude after changing can be specified by each angle θ_{X}, θ_{Y} and θ_{Z}. In following explanation, the angle θ_{X} around X-axis is referred as pitch angle, and the angle θ_{Y} around Y-axis is referred as roll angle, and the angle θ_{Z} around Z-axis is referred as yaw angle. By using the geomagnetic sensor 303, for example, the direction of the Y-axis facing against north can be detected. In this case, for example, the direction to which the mobile phone is facing can be specified with the angle between the Y-axis and the north bearing (hereinafter referred to as "bearing angle") θ_{N}. This geomagnetic sensor 303 is also mounted on the circuit board (not shown) provided inside the external sensor apparatus 30.

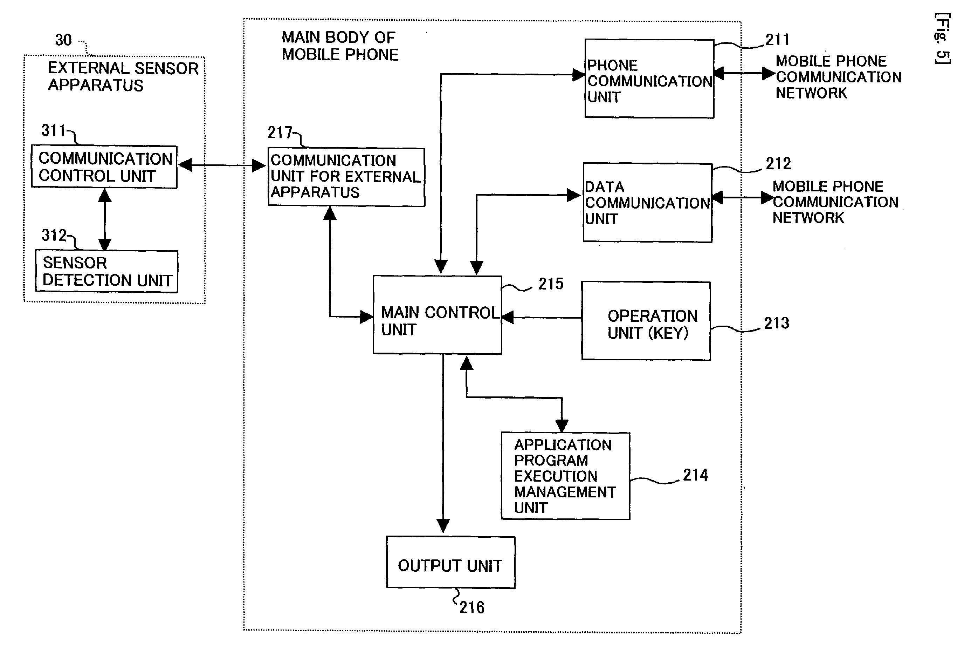

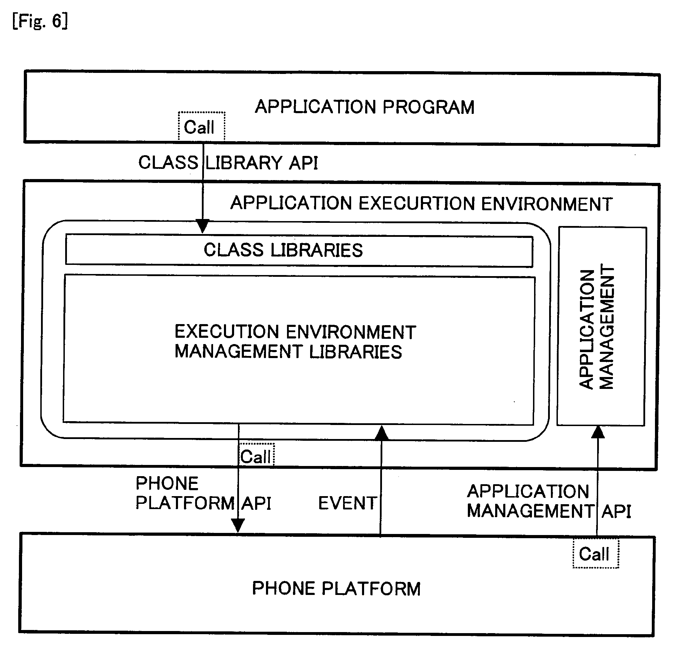

Fig. 5 shows a block diagram extracted from the main parts of the mobile phone 20, and Fig. 6 is an illustration of software configuration in the mobile phone 20.
This mobile phone 20 is comprised of a phone communication unit 211, a data communication unit 212, an operation unit 213, an application program execution management unit 214 as an application program execution means, a main control unit 215, an output unit 216, and a communication unit for external apparatus as data reception means, etc. in the main body. Also, a communication control unit 311 as data transmission means and a sensor detection unit 312 as detection means, etc. are provided in the external sensor apparatus 30.

The phone communication unit 211 performs radio communication with the base station of the mobile phone network 10 to make calls with other mobile phones and fixed phones, and is corresponding to a communication device 206 for mobile phone network etc. in the above-described hardware configuration.

The data communication unit 212 is corresponding to the communication device 206 for mobile phone network etc. in the above-described hardware configuration, as the same as the foregoing phone communication unit 211. This data communication unit 212 is used for exchanging mails with other mobile phones via the mobile phone network 10, and used for exchanging e-mails and browsing Web pages on the Internet by connecting to external communication networks such as the Internet via gateway servers from the mobile phone network 10. This data communication unit 212 is also used for downloading application programs provided by the download server 11 via the mobile phone network 10.

The operation unit 213 is comprised of the ten keys 21, the call start key 22, and the call end key 23, etc. which can be operated by the user 1. By operating this operation unit 213, users can enter data such as URL etc. into the mobile phone 20, and start and/or end a call when receiving the call, and select, start and/or stop an application program. Users can also download application programs from the download server 11 by operating the operation unit 213.

The application program execution management unit 214 is comprised of the above-mentioned system bus 200, and a part of CPU 201 and RAM 202, etc. This application program execution management unit 214 is corresponding to "application execution environment" in the central of the software configuration of Fig. 6, provides class libraries, execution environment management libraries and software for application management etc. that are used in application programs developed by object-orient programming, and manages the application program execution environment. This application execution environment is appropriately selected according to the executing application programs. For example, in the case in which the executing application program is written in JAVA (Trademark), a JAVA (Trademark) application execution environment will be selected. And, in the case in which the executing application program is written in C language functioning on BREW (Trademark) execution environment, a BREW (Trademark) application execution environment will be selected. In the case in which the executing application program is written in JAVA (Trademark), it can be executed by building a JAVA (Trademark) application execution environment on BREW (Trademark) application execution environment.

An application program can call up and use class libraries such as functions in the application execution environment via class library API (Application Interface). The history of calling up class libraries such as functions is stored into the application memory area in RAM 202 until the virtual execution environment (Virtual Machine: VM) for the application program exits. Also, various kinds of data used when executing the application program are stored into the application memory area by the application execution environment. And when using these various kinds of data, they are written into or read from this application memory area. The execution environment management libraries in the application execution environment can be used by calling up phone platform libraries in an after-mentioned phone platform via phone platform API.

Detection result data (acceleration α_{X}, α_{Y} and pitch angle θ_{X}, roll angle θ_{Y} and yaw angle θ_{Z}) detected by after-mentioned sensor detection unit 312 which is comprised of the acceleration sensor 302 and the geomagnetic sensor 303, etc. are utilized in application programs. In conventional application execution environments, there were no means for application programs to utilize the detection result data, so that in the present embodiment, a new class (Orientation class) was added in the class libraries. In this Orientation class, methods as instruction sets of getXGravity() and getYGravity() to get acceleration α_{X} and α_{Y} data, and getPitch(), getRol1(), getCompassBearing() to get pitch angle θ_{X}, roll angle θ_{Y}, yaw angle θ_{Z} are offered. Therefore, according to the present embodiment, application programs can obtain the detection result data and utilize them by using these methods.

The main control unit 215 controls the phone communication unit 211, the data communication unit 212, the operation unit 213, and the external apparatus communication unit 217, and the sensor detection unit 312 of the external sensor apparatus 30, and is comprised of the foregoing system bus 200, CPU 201 and RAM 202, etc. This main control unit 215 exchanges control instructions and various kinds of data with the application program execution management unit 214 and performs the control task by working with them. The main control unit 215 is corresponding to "phone platform" in the lowest part of the software configuration of Fig. 6, and executes a control program for controlling the phone communication unit 211 and a user interface, and provides phone platform libraries. This phone platform can perform various types of processes in the application program, and can call up the application control software in the application execution environment via the application control API and use it, by sending events to the execution environment control libraries in the application execution environment. Also, when the application execution environment calls up a phone platform library via phone platform API and uses it, the phone platform executes a process in accordance with the phone platform library. For example, the phone platform can read out data stored in the platform memory area managed by the phone platform in RAM 202 and move this data to the application memory area, based on instructions from the application execution environment by utilizing the phone platform libraries.

The output unit 216 is equipped with an output device 205 etc. comprising the liquid crystal display (LCD) 27 and the speaker 28, etc. This output unit 216 displays Web page screens received by the data communication unit 212 on the liquid crystal display 27. The liquid crystal display 27 of this output unit 216 is also used when notifying users that information is received by the phone communication unit 211 and the data communication unit 212. Specifically, when receiving the information, a receiving notification image is displayed on the liquid crystal display 27 of output unit 216, and/or a receiving melody is output from the speaker 28 by the main control unit 215. Further, while an application program executed on the application execution environment is executing, this output unit 216 is used for displaying menu screen image etc. and/or outputting music, which are related to execution of the program.

The external apparatus communication unit 217 is corresponding to the communication device 207 for external apparatus etc. in the above-described hardware configuration. This external apparatus communication unit 217 is to perform data communication, which is wired non-public short-range communication, with the external sensor apparatus 30 connected with the external connection port 29 via this port. Specifically, it sends instructions (commands) from the main control unit 215 to the external sensor apparatus 30, and receives detection result data sent from the external sensor apparatus 30.

The communication control unit 311 provided in the external sensor apparatus is corresponding to the communication device 301 etc. in the above-described hardware configuration. This communication control unit 311 is for data communication with the main body of the mobile phone via the external connection port 29. Specifically, it receives instructions (commands) from the main body of the mobile phone, and sends detection result data detected and obtained by the sensor detection unit 312 to the main body of the mobile phone.

The sensor detection unit 312 provided in the external sensor apparatus is comprised of the foregoing acceleration sensor 302 and the forgoing geomagnetic sensor 303, etc. This sensor detection unit 312 works under the control of the main control unit 215, and data of the acceleration α_{X} and α_{Y}, the pitch angle θ_{X}, the roll angle θ_{Y} and the yaw angle θ_{Z} specified with the detection results are obtained by the main control unit 215 from the communication control part 311 via the external apparatus communication unit 217. These data are stored into the platform memory area in RAM 202 as described above.
For example, when the position of mobile phone 20 is changed by the user 1, the acceleration α_{X}, and α_{Y} working in the X-axis direction and Y-axis direction are detected by the acceleration sensor 302 forming the sensor detection unit 312 in the external sensor apparatus 30 attached to be incorporated with the main body of the mobile phone. Then, the detection result data is input into the main control unit 215 from the communication control unit 311 via the external apparatus communication unit 217, and is stored into the platform memory area in RAM 202 by the main control unit 215 working as memory process means.
When the attitude of mobile phone 20 is changed, the pitch angle θ_{X}, the roll angle θ_{Y} and the yaw angle θ_{Z} after changing the attitude are detected by the geomagnetic sensor 303 forming the sensor detection unit 312 in the external sensor apparatus 30. Then, the detection result data is input into the main control unit 215 from the communication control unit 311 via the external apparatus communication unit 217, and is stored into the platform memory area in RAM 202 by the main control unit 215, in the same way as in case of the acceleration α_{X} and α_{Y}.
When the direction of mobile phone 20 is changed, the bearing angle θ_{N} after changing of the direction is detected by the geomagnetic sensor 303 forming the sensor detection unit 312 in the external sensor apparatus 30. Then, the detection result data is input into the main control unit 215, and is stored into the platform memory area in RAM 202 by the main control unit 215 as well.

The following methods can be adopted as a method for acquiring acceleration α_{X} and α_{Y} and each angle θ_{X}, θ_{Y}, and θ_{Z} data stored in the platform memory area from the sensor detection unit 217 by the main control unit 215. For example, there is an acquiring method in which the main control unit 215 sends a request to the sensor detection unit 312 via the external apparatus communication unit 217 and the communication unit 311, and in accordance with this request, the main control unit 215 receives output data from the sensor detection unit 312 via the external apparatus communication unit 217 and the communication unit 311. Furthermore, for example, other acquiring methods can be adopted, in which the external apparatus communication unit 217 accordingly sends data output continuously from the sensor detection unit 312 without request then the main control unit 215 receives the data via the communication control unit 311, or in which the main control unit 215 accordingly receives the output data via the external apparatus communication unit 217 and the communication unit 311. Also, an acquiring method can be adopted, in which the main control unit 215 sends a request to the sensor detection unit 312 via the external apparatus communication unit 217 and the communication unit 311 in accordance with a request output by an application program via the application program execution management unit 214, and the main control unit 215 receives data output from the sensor detection unit 312 in accordance with the request, via the external apparatus communication unit 217 and the communication unit 311.

A control program to build a phone platform operating the mobile phone according to the predetermined procedure is stored in RAM 202 and/or ROM 203. A basic OS (Operating System) program, programs to build the application execution environment and application programs are stored in RAM 202 and/or ROM 203. These programs are called up as necessary to the working area in CPU 201 and RAM 202 and executed.

### [Operation Example 1]

Next, a process operation (hereinafter referred to as "Operation Example 1") to execute an application program using the acceleration α_{X} and α_{Y} will be described. The application program of the present operation example 1 makes the mobile phone 20 function as a mouse that is a pointing device for a portable-type personal computer such as a notebook-size personal computer or PDA, etc. Of course, it can work in the same way as a pointing device for desktop personal computers as well.

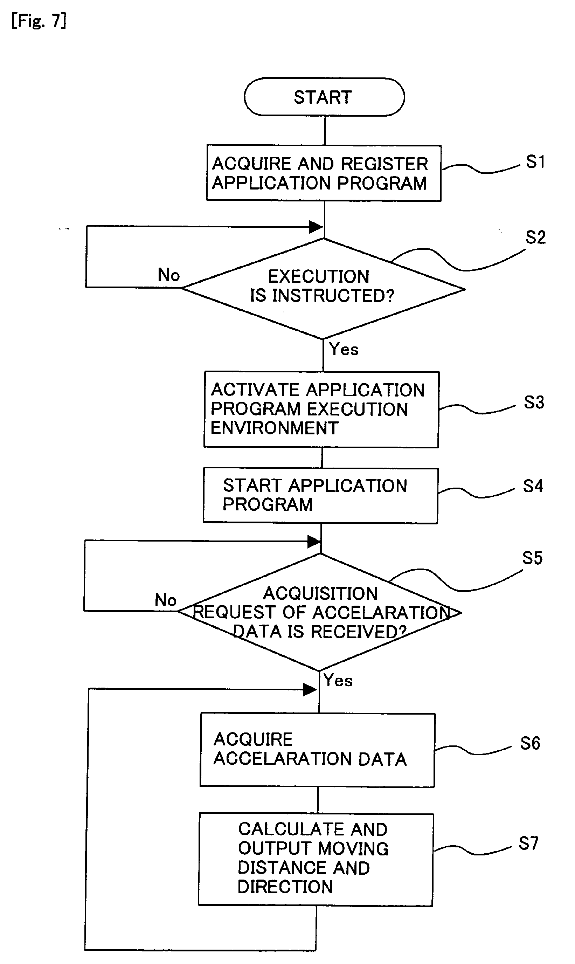

Fig. 7 is a flow chart showing process flow to execute an application program in the present operation example 1.
First, user 1 obtains a mouse application program from the download server 11 and registers it (S1). Specifically, user 1 operates keys in the operation unit 213 and has access to the download server 11. Accordingly, a download selection screen for selecting a downloadable application program will be displayed on the liquid crystal display 27. Then, on the download selection screen, the user selects the mouse application program subject to execution by using the scroll key 24, and presses the multifunction key, so that the main control unit 215 downloads the application program from the download server 11 by controlling the data communication unit 212. In this way, the downloaded application program is saved in RAM 102 by the main control unit 215.

When executing the downloaded application program, first, the user 1 connects a USB (Universal Serial Bus) port (not shown) of the mobile phone 20 to a USB port of a notebook-size personal computer etc. Although the connection method in the present embodiment is a cable connection utilizing the USB port, methods using other cable connections or wireless connections may be used. As the communication means used when this mobile phone 20 is connected to notebook-size personal computers etc., it is possible to use any communication means capable of data communication with notebook-size personal computers, which is not limited to the USB port. Once the mobile phone 20 is connected to the notebook-size personal computer etc., the user 1 operates keys on the operation unit 213 to display an application selection menu used for selecting an application subject to be executed, on the liquid crystal display 27. Then, on the application selection menu, the mouse application program subject to be executed is selected by using the scroll key 24, and the multifunction key 25 is pressed down. Then, an instruction for executing the application program will be input into the phone platform shown in Fig. 6, i.e. the main control unit 215 shown in the Fig. 5 (S2). Accordingly, the main control unit 215 activates the application execution environment shown in fig 6, i.e. the application program execution management unit 214 shown in Fig. 5 (S3). Then, the application program execution management unit 214 reads out the mouse application program and starts it (S4).

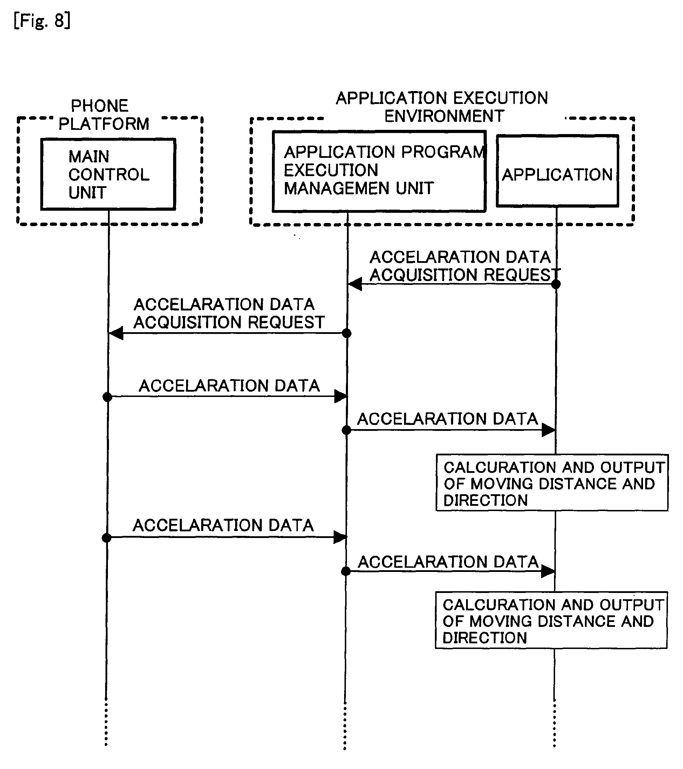

After the mouse application program is started, the application program acquires the acceleration data α_{X} and α_{Y} detected by the sensor detection unit 312 in almost real time. Then, the application program calculates the moving distance and direction of the mobile phone 20 based on the acquired data. These moving distance and direction are continued to be output to the notebook-size personal computers etc. via the external ports of the mobile phone 20 at predetermined short intervals.
Specifically, as shown in Fig. 8, on the application execution environment, the started application program sends a request for acquiring acceleration data to the application program execution management unit 214. The application program execution management unit 214 receiving this request sends an acquisition request for acceleration data as a data transfer instruction to the main control unit 215 of the phone platform (S5). The main control unit 215 receiving this request sends the acceleration data α_{X} and α_{Y} memorized in the platform memory area in RAM 202 to the application program execution management unit 214, and the data are passed to the application program (S6). Then, the application program receiving the acceleration data α_{X} and α_{Y} memorizes the data into the application memory area in RAM 202. Then, the moving distance and direction of the mobile phone 20 are calculated from the acceleration data α_{X} and α_{Y}, and a process is performed to output information of the moving distance and direction to the notebook-size personal computer etc. from the external port. (S7). In the present operation example 1, after the main control unit 215 receives the acquisition request for acceleration data from the application program execution management unit 214, whenever the acceleration α_{X} and α_{Y} in the platform memory area are updated, the updated data are sent to the application execution management unit 214. Therefore, in almost real time, the mouse application program can acquire the acceleration data α_{X} and α_{Y}, and output the information of the moving distance and direction to a notebook-size personal computer etc.

In the operation example 1 as described above, the mobile phone 20 can be used as a pointing device for portable-type personal computers etc. Generally, since such portable-type personal computers are miniaturized, the operationality of built-in pointing devices is inferior to desktop personal computers. Accordingly, some users often carry a so-called removable mouse with a portable-type personal computer. In the present operation example 1, the mobile phone 20 that typical users almost always carry can be utilized as a removable mouse. Therefore, it is not necessary to carry a removable mouse as a conventional way, and users can get the same operationality as desktop personal computers.

In the present operation example 1, the mouse application program is described as an example of application programs using the acceleration data α_{X} and α_{Y}; however, the present invention is by no means intended to be limited to this example.
As other application programs, for example, there is an application program to make the mobile phone 20 work as a pedometer (Trademark). In this case, the application program, for example, has a content by which acceleration data are acquired continuously in almost real time the same as above, and the times when the acceleration exceeds a certain threshold are counted. Also, if the acceleration data α_{X} and α_{Y} are used, movement of user 1 such as walking, running or riding on trains can be assumed from the acceleration change. It is possible to provide an application program such as to record the daily activity history of user 1 based on these assumptions. At this time, if the bearing angle data θ_{N} detected by the geomagnetic sensor 303 is also utilized, the bearing to which user 1 is moving can be recognized, so that it is possible to record the daily activity history in more detail. The storage location of this activity history is not limited to inside the mobile phone 20 and the activity history may be saved to a predetermined server on a communication network from the data communication unit 212.
Moreover, as other application programs, for example, there is an application program to make the mobile phone 20 work as an alarm clock whose alarm can be stopped by giving an impact to the mobile phone 20. In this case, the application program, for example, stops the alarm when acceleration exceeds a certain value while beeping the alarm. Accordingly, since users do not need to perform conventional button operations to stop the alarm, the convenience of users can be enhanced.

### [Operation Example 2]

Next, a process operation to execute application programs using the pitch angle θ_{X}, the roll angle θ_{Y} and the yaw angle θ_{Z} (hereinafter referred to as "Operation example 2") will be described. The application program in the present operation example 2 is a flight simulator game.

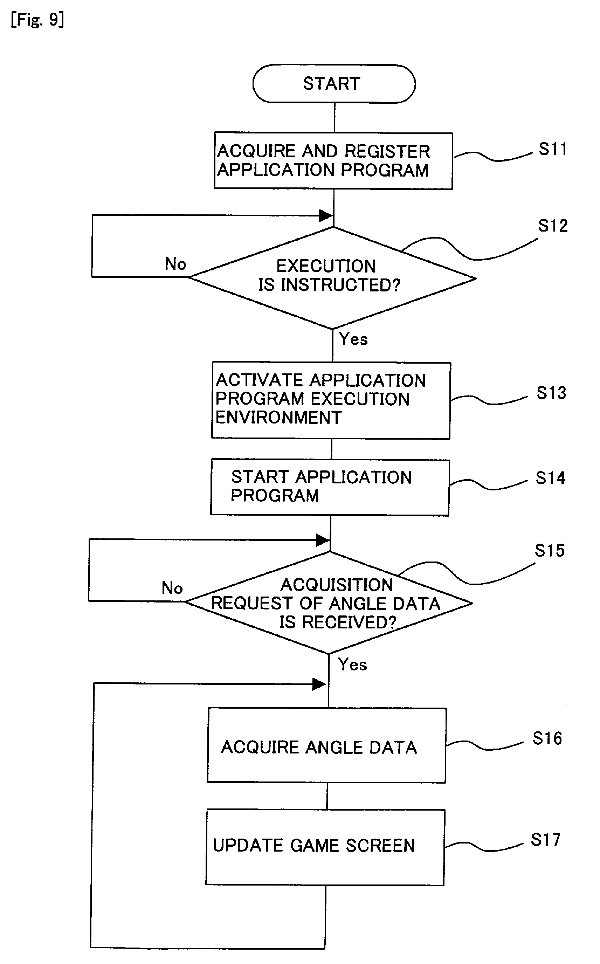

Fig. 9 is a flow chart showing process flow to execute an application program in the present operation example 2.
User 1 downloads and obtains a flight simulation program (application program) from the download server 11, and starts it (S11-S14) in the same way as in above-described operation example 1. After this program is started, the output unit 216 displays a game screen illustrating a pseudo-view from an airplane cockpit on LCD27. This program acquires the pitch angle θ_{X}, the roll angle θ_{Y} and the yaw angle θ_{Z} data detected by the sensor detection unit 312 in almost real time. Then, the program updates the content of the game screen displayed on the LCD 27 in accordance with the acquired data. For example, when user 1 tilts down the antenna side of the mobile phone 20 vertically, the pitch angle θ_{X} changes by this action, so that the game screen is updated to display the airplane nose tilting down vertically in the game. And, for example, when user 1 tilts the mobile phone 20 to the left, the roll angle θ_{Y} changes by this action, so that the game screen is updated to display the airplane tilting left in the game.

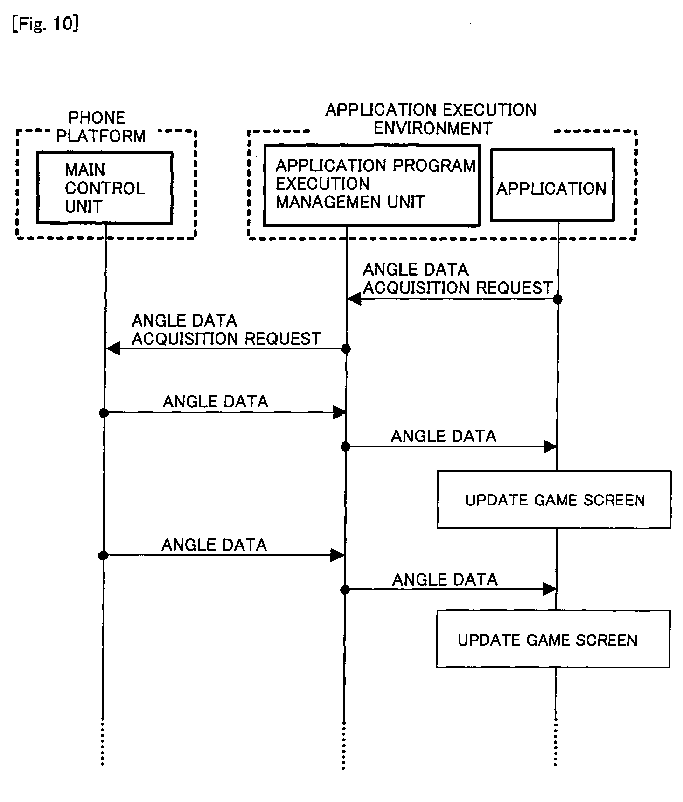

Specifically, as shown in Fig. 10, on the application execution environment, the started application program sends a request for acquiring the angle data to the application program execution management unit 214. The application program execution management unit 214 receiving this request sends a request for acquiring the angle data as a data transfer instruction to the main control unit 215 of the phone platform (S 15). The main control unit receiving this request sends the pitch angle θ_{X}, the roll angle θ_{Y} and the yaw angle θ_{Z} data stored in the platform memory area in RAM 202 to the application program execution management unit 214, and these data are passed to the application program (S16). Then the application program acquiring the pitch angle θ_{X}, the roll angle θ_{Y} and the yaw angle θ_{Z} data stores the data into the application memory area in RAM 202. Then, the game screen is updated based on the pitch angle θ_{X}, the roll angle θ_{Y} and the yaw angle θ_{Z} data, and the process to display the updated game screen on the LCD 27 in the mobile phone 20 is executed (S 17). In the present operation example 2, in the same way as in the operation example 1, after the main control unit 215 receives a request for acquiring the angle data from the application program execution management unit 214, whenever the angle θ_{X}, θ_{Y} and θ_{Z} data are updated, the main control unit 215 sends the updated data to the application program execution management unit 214. Therefore, user 1 can enjoy the game in which airplane flight can be controlled by tilting the main body of the mobile phone 20 while viewing the LCD 27 of the mobile phone 20.

In the operation example 2 as described above, by tilting the main body of the mobile phone 20, a game controlling airplane flight on a flight simulator can be provided. Although airplane flight control in the flight simulator may be possible by operating the operation unit 213 of the mobile phone 20, the present operation example 2 provides more realistic flight control.

In the present operation example 2, the flight simulation program is described as an example of application programs using the pitch angle θ_{X}, the roll angle θ_{Y} and the yaw angle θ_{Z} data; however, the present invention is by no means intended to be limited to this example.
As other application programs, for example, a game in which a ball is dropped into a hole in the game screen to be displayed on the LCD 27 can be considered. In this case, the application program content, for example, is such that by tilting the mobile phone 20, the ball in the game screen moves in the tilted direction.

Regarding other application programs using the acceleration α_{X} and α_{Y}, and the direction angles θ_{X}, θ_{Y}, and θ_{Z}, an application program that makes the mobile phone 20 work as input means for changing various types of settings such as a manner mode set by position, direction, attitude and movement of the mobile phone 20 can be taken for example. In this case, the content of the application program, for example, is for setting the manner mode when an attitude of the mobile phone 20 is in a standing state, or is for setting the power saving mode when the mobile phone is in a static state.

In the present embodiment, the main control unit 215 works to send the updated data to the application program execution management unit 214 whenever the data in the platform memory area is updated after receiving the acquisition request from the application program execution management unit 214; however, the operation can be modified appropriately in accordance with the content of the application program. For example, when an acquisition request from the application program execution management unit 214 is received, the main control unit 215 may be to send the data in the platform memory area to the application program execution management unit 214 only once. Or the application program execution management unit 214 may be to output the acquisition request without waiting for an instruction from the application program.
Furthermore, in the present embodiment, it is described the case in which detection result data sent from the external sensor apparatus 30 is utilized for platform-independent application programs executing on application execution environments built on the phone platform; however, it is the same as for platform-dependent application programs i.e. executing directly on the phone platform.

Furthermore, in the present embodiment, an external sensor apparatus which can be freely attached to and remove from the external connection port 29 on the mobile phone body is used for the external sensor 30; however, the present invention is by no means intended to be limited to this. For example, it may be configured so that it is possible that a USB port is provided on the main body of the mobile phone and then the external sensor apparatus is connected detachably to the USB port. Also, for example, it may also be configured so that the external sensor apparatus is built into the main body of the mobile phone by providing an attachable and removable card type slot for the external sensor apparatus in the main body of the mobile phone and connecting the external sensor apparatus detachably to the attachable and removable slot. If an attachable and removable slot for a memory card is provided on the mobile phone body, the attachable and removable slot may be used as the attachable and removable card type slot for the external sensor apparatus. As this type of memory card, a SD memory card, a CF (Compact Flash (Trademark)) memory card, a smart media, a memory stick, a MMC (Multi Media Card), etc. can be listed.

Furthermore, in the present embodiment, when the external sensor apparatus 30 is connected to a mobile phone body, the external sensor apparatus 30 and the mobile phone body are incorporated so as to be one unit. Such configuration is suitable to detect position, direction, attitude and/or movement of the mobile phone body, but may be unsuitable when it is desired to detect position etc. of objects (for example, User 1) other than the mobile phone body. For example, in the case in which an application program is for the flight simulator described in the operation example 2, if the external sensor apparatus 30 and the mobile phone body are incorporated, when attitude of the mobile phone is changed and handled, the game screen displayed on the LCD 27 is moved in conjunction with that. In such a case, it is better to adopt a configuration that the external sensor apparatus 30 and the mobile phone body are not incorporated and data communication with wired or wireless non-public short-range communication between them can be performed. According the configuration, it is possible to keep the LCD 27 that displays the game screen fixed without depending on the handling such that the attitude of the external sensor apparatus changes during the game. In case of adopting such configuration, a wired connection using cable etc. may be used as the communication method between the external sensor apparatus and the main body of the mobile phone; however, the usability of wireless connection methods using wireless communication can be higher. As a method for wireless connection between these, for example, wireless short-range communication such as Bluetooth (Trademark) etc. or infrared data communication (IrDA) can be adopted.

### [Variation 1]

Next, an example (hereinafter, this variation is referred to as "Variation 1") other than the foregoing external sensor apparatus will be described. An external sensor apparatus according to the present variation 1 is used by attaching to an SD card slot as a memory card slot provided on the main body of the mobile phone body.

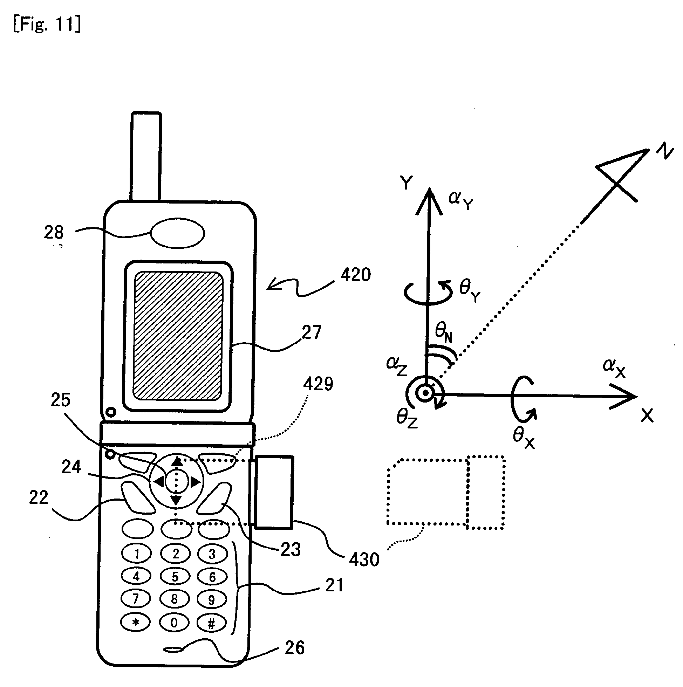

Fig. 11 is an illustration showing external view of a mobile phone 420 and coordinates in this variation 1. An SD card slot 429 is provided in the mobile phone 420. Normally, an SD memory card is attached into this SD card slot 429, and the SD card slot is utilized for using the SD memory card as an external memory device. An SD card sensor 430 as an external apparatus for mobile communication terminal in this variation 1 is used by being attached to this SD card slot 429. An acceleration sensor 302 and a geomagnetic sensor 303 are mounted in this SD card sensor 430 in the same way as in the foregoing external sensor apparatus 30. As an acceleration sensor 302, a 3-axis sensor may be used rather than a 2-axis sensor so that it is possible to detect acceleration α_{Z} working along with Z-axis in addition to the acceleration α_{X} and α_{Y} working along with X-axis and Y-axis directions. The 3-axis sensor may be used instead of the 2-axis sensor in the above-described embodiments and after-mentioned variation 2. Also, in the present variation 1, as shown in Fig. 11, when the SD card sensor 430 is attached into the SD card slot 429 of the main body of the mobile phone, a part of the mobile phone, in which the acceleration sensor 302 and the geomagnetic sensor 303 are mounted, becomes exposed to the outside. These sensors can be mounted in a part of the mobile phone in which the sensors enter inside the slot. In this case, the whole SD card sensor 430 attached the SD card slot 429 can be taken inside the main body of the mobile phone, so that any part of the SD card sensor 430 is not exposed to the outside.

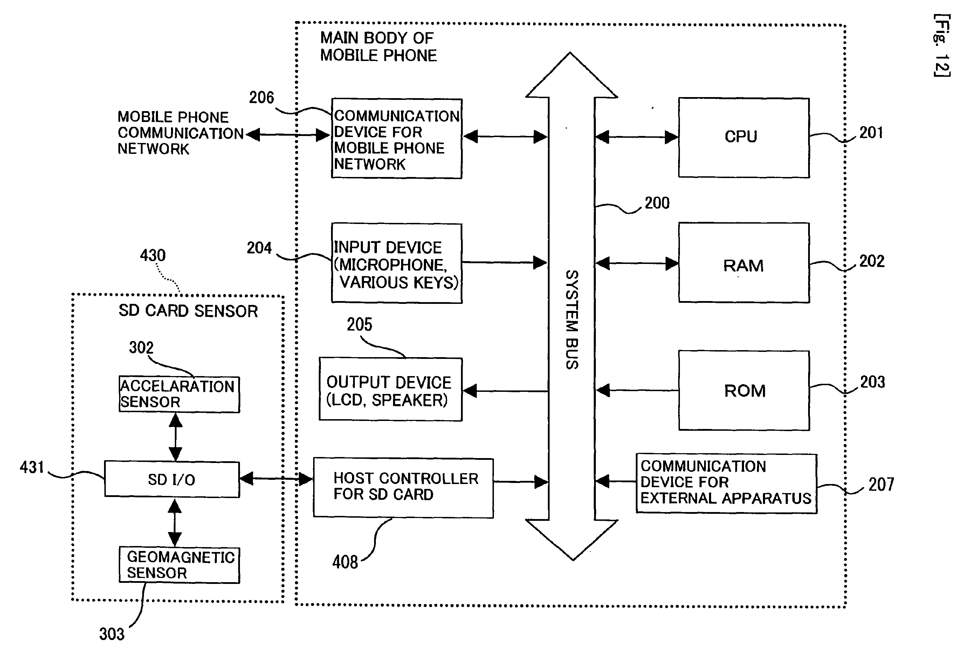

Fig. 12 is a schematic block diagram showing the hardware configuration of the mobile phone 420 in the present variation 1.
The basic configuration of the main body of the mobile phone in the present variation 1 is the same as the above-described embodiment; however, the mobile phone body has a different configuration from the embodiment in that a host controller 408 for SD card is added. This host controller 408 for SD card is for data communication with the SD card attached in the SD card slot 429 according to SDI/O standards. On the other hand, for the SD card sensor 430, a SDI/O 431 is provided for data communication with the host controller 408 for SD card. The host controller 408 for SD card and the SDI/O 431 are connected by a command line, data line, power supply line, etc. according to SDI/O standards. A block diagram showing an extracted main part of the mobile phone 420 in the present variation 1 is the same as above-described block diagram shown in Fig. 5. However, in this block diagram, the external apparatus communication unit 217 is corresponding to the host controller 408 for SD card etc. in the above-described hardware configuration, and the communication unit 311 is corresponding to the SDI/O 431 etc. in the hardware configuration.

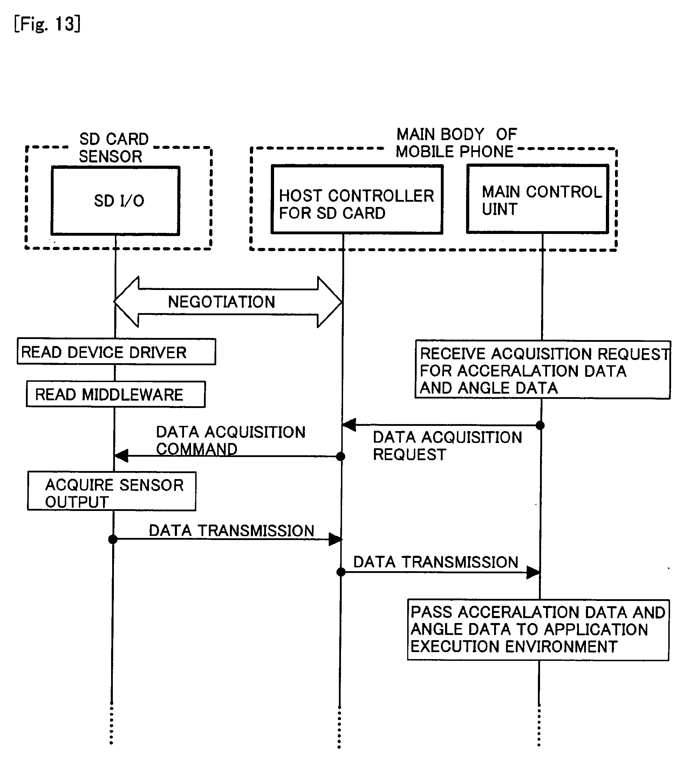

Fig. 13 is a figure showing a communication sequence between the main body of the mobile phone 420 and the SD card sensor 430 in the present variation 1.
The SD card sensor 430 is attached to the SD card slot 429 of the mobile phone body in power-off status of the mobile phone 420, and the power is turned on. Then, negotiation in accordance with SDI/O standards is performed between the host controller 408 for SD card of the mobile phone body and the SDI/O 431. Thereafter, the SDI/O 431 reads a device driver for each sensor 302 and 303 stored in the code storage area, and also reads middleware to establish data communication with the host controller 408 for SD card. Then, as shown in Fig. 8 and Fig. 10, when the main control unit 215 receives a data acquisition request for acquiring acceleration data and/or angle data from the application program execution management unit 214, the main control unit 215 sends a data acquisition request to the host controller 408 for SD card. The host controller 408 for SD card receiving this request sends a data acquisition command to the SDI/O 431 via the command line. Accordingly, the SDI/O 431 receives sensor output from the acceleration sensor 302 and the geomagnetic sensor 303, and data of acceleration α_{X} and α_{Y} and each angle θ_{X}, θ_{Y}, and θ_{Z} are returned to the host controller 408 for SD card via the data line. If the foregoing 3-axis sensor is used as the acceleration sensor 302, the SDI/O 431 also returns acceleration α_{Z} data in addition to acceleration α_{X} and α_{Y} data to the host controller 408 for SD card. Then, the host controller 408 for SD card sends these data to the main control unit 215, and the main control unit 215 sends these data to the application program execution management unit 214.

In the present variation 1 as described above, it is possible to provide an external sensor apparatus using the SD card slot 429 on a mobile phone 20, and to use application programs described in the above operation example 1 and operation example 2, in the same way as in the above-described embodiment. Similar external apparatuses for mobile communication terminals can be provided, which utilizes not only SD cards but also memory cards such as CF (Compact Flash (Trademark)) card, smart media, memory sticks, MMC (Multi Media Card), etc.

### [Variation 2]

Next, another variation (hereinafter, this variation is referred to "Variation 2") of the foregoing external sensor apparatus will be described below. An external sensor apparatus according to the present variation 2 is used for data communication that is wired non-public short-range communication through the external connection port 29 in the main body of the mobile phone, in the same way as in the above-described embodiment, and used as a game controller for a game application such as the flight simulator described in the above operation example 2.

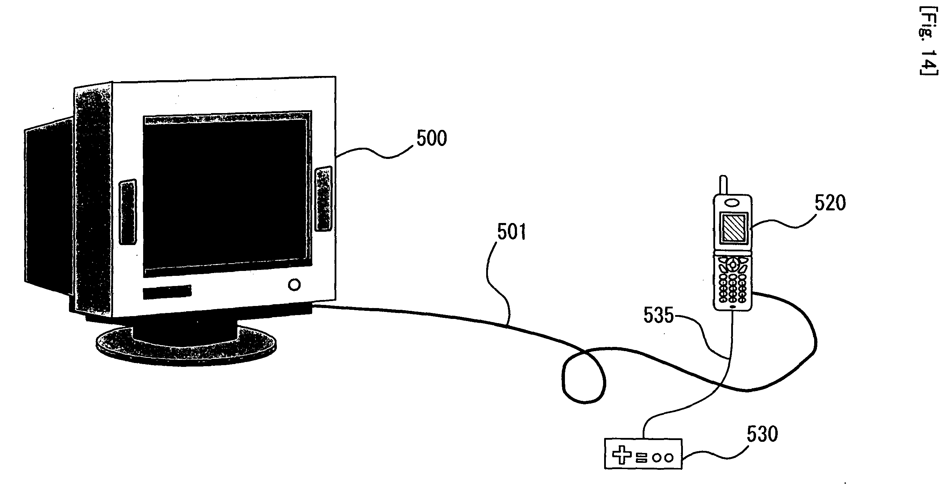

Fig 14 is an illustration showing the overall configuration of the whole system in variation 2. A mobile phone 520 in the present variation 2 is configured so that it can be connected to a general television device 500 as an external display device with an audio output function. A communication cable 501 for connecting the mobile phone 520 and the television device 500 is flexible and used for sending three general analog signals; two audio signals (left and right) and a composite video signal, from the mobile phone 520 to the television device 500. The composite video signal is a general signal that includes all of brightness signal, color signal and synchronizing signal of television screen.
Moreover, as shown in Fig. 14, the external apparatus for mobile communication terminal in the present variation 2 is a game controller 530 and connected to the external connection port 29 via a flexible communication cable 535. The acceleration sensor 302 and the geomagnetic sensor 303 are mounted in the game controller 530 in the present variation 2 as the same as the foregoing external sensor apparatus, and a cross-shape key and a button (key) etc. are provided on the acceleration sensor.

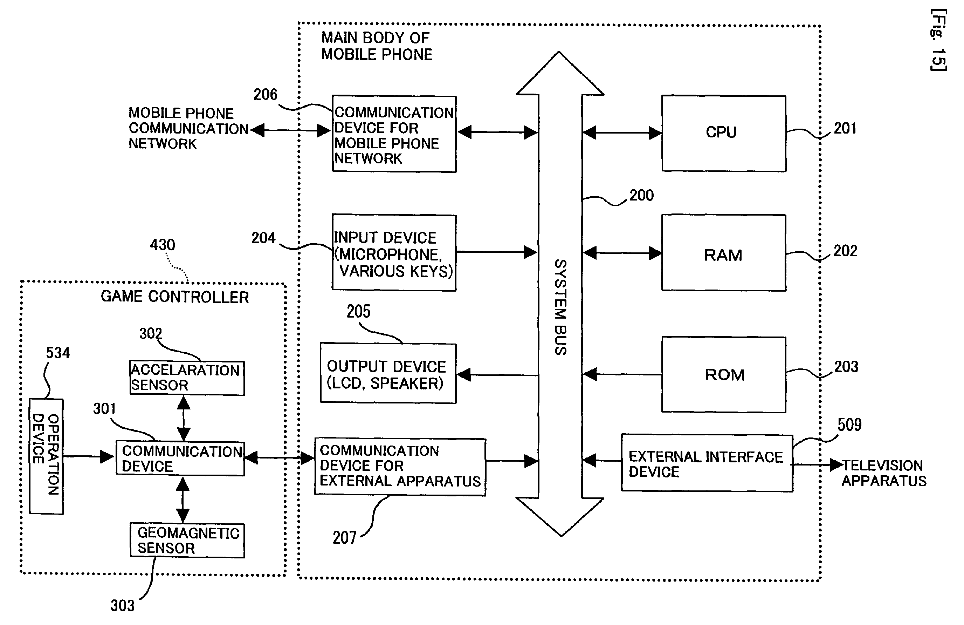

Fig. 15 is a schematic block diagram showing a hardware configuration of the mobile phone 520 in the present variation 2.
The basic configuration of the main body of the mobile phone in the present variation 1 is the same as that in the above embodiment; however, it is different from the above embodiment in that an external interface device 509 as an image output means for outputting the image signal and audio signal to the television device 500 is added. This external interface device 509 is comprised of an amplifier, an output connector, etc., and outputs the image signal (composite video signal) and the audio signals (two audio signals (left and right) for stereo) that are sent to the speaker, to the television device 500. Accordingly, the same image as the image displayed on the liquid crystal display 27 displays on the television device 500.
Moreover, the acceleration sensor 302 and the geomagnetic sensor 303 are mounted in the game controller 530 in the present variation 2 as the same as the foregoing external sensor apparatus, and an operation device 534 as key operation means comprising a cross-shape key and buttons is provided on the game controller. A key operation signal from the operation device 534, which is generated when the user operates the cross-shape key or the buttons, is sent to the communication device 207 for external apparatus through the communication device 301, similarly to the case in which the acceleration data and the angle data which are detected by the acceleration sensor 302 and the geomagnetic sensor 303. A block diagram showing the extracted main part of mobile phone 520 in the present variation 2 is almost the same as the block diagram shown in Fig. 5. However, in this block diagram, the output unit 216 is corresponding to the external interface device 509 in the above-described hardware configuration as well as the output device 205, etc., and an operation unit corresponding to the operation device 534 in the hardware configuration is added in the external sensor apparatus 30.

When the application program for the flight simulation of the present variation 2 is performed by using the mobile phone 520 of this variation 2, the game screen displayed on the liquid crystal display 27 is displayed on the image displaying area of the television device 500. Accordingly, users can play the flight simulator while watching the game screen on the television device 500 larger than the liquid crystal display 27. Since users can play the flight simulator while watching the game screen on the television device 500, even in the case that the external sensor apparatus 30 and the mobile phone body are incorporated such as the above-described embodiment, the game screen does not move with changing attitude of the external sensor apparatus.
Furthermore, in the present variation 2, the external apparatus for mobile communication terminal including the acceleration sensor 302 and the geomagnetic sensor 303 is the game controller 530 only for operating games, so that operationality while playing the game in the present variation 2 can be improved compared to playing the game by operating data input keys on the mobile phone body. Moreover, the game controller 530 is connected to the main body of the mobile phone by flexible communication cable 535. Therefore, the game screen will not move with changing attitude of the game controller 530 even in the case of playing the game while watching the game screen displayed on the liquid crystal display 27 of the mobile phone body such as the above-described embodiment.

In the embodiments (including the variation 1 and variation 2) as described above, the sensor detection unit 312 is provided on the external sensor apparatus 30, 430 and 530 as separate devices from the main body of the mobile phone, whereby it is possible to execute application programs using detection result data of the sensor detection unit 312 in the mobile phone body without raising the cost of the mobile phone body. Moreover, user 1 can purchase only the external sensor apparatus 30, 430, and 530 separately from the mobile phone body, whereby for users 1 who does not use application programs using the result data of sensor detection unit 312, it is not necessary to absorb the cost of the sensor detection unit 312.

As described above, preferred embodiments of the present invention are described; however, without departing from the scope or spirit of the present invention and within the scope of technical matters described in the scope of claims, various modifications can be added to the disclosed embodiments. For example, the present invention can be applied not only to the mobile phones, but also mobile communication terminals such as PHS, automobile phones, and portable PDA, etc., by which the same effect can be obtained.

## Claims

1. An external apparatus for mobile communication terminal comprising:
detection means for detecting at least one of position, direction, attitude and movement of said external apparatus; and
data transmission means for transmitting detection result data acquired based on detection results by said detection means to said mobile communication terminal by wired or wireless non-public short-range communication.

2. An external apparatus for mobile communication terminal according to claim 1, wherein said detection means includes angle detection means for detecting an angle against the standard angle around a virtual axis leading to a predetermined direction.

3. An external apparatus for mobile communication terminal according to claim 1 or 2, wherein said detection means includes acceleration detection means for detecting acceleration in a predetermined direction working on said external apparatus.

4. An external apparatus for mobile communication terminal according to claim 1, 2 or 3, further comprising key operation means having keys used by users, wherein said data transmission means transmits key operation signals from said key operation means and said detection result data to the mobile communication terminal by non-public communication using flexible communication cable or wireless non-public communication.

5. An external apparatus for mobile communication terminal according to claim 1, 2 or 3, being configured to be freely attached to and removed from a memory card slot provided in said mobile communication terminal.

6. An external apparatus for mobile communication terminal according to claim 5, being configured to be completely received in said memory card slot when said external apparatus is attached to the said memory card slot.

7. A mobile communication terminal comprising application program execution means for executing an application program with detection result data acquired based on detection results by detection means for detecting at least one of position, direction, attitude and movement, in a main body of said mobile communication terminal, said mobile communication terminal being **characterized by** comprising:
said external apparatus for mobile communication terminal according to claim 1, 2 or 3; and
data reception means for receiving detection result data transmitted from said external apparatus for mobile communication terminal by wired or wireless non-public short-range communication, in the main body of said mobile communication terminal; wherein
said application program execution means executes said application program with detection result data received by said data reception means.

8. A mobile communication terminal comprising application program execution means for executing an application program with detection result data acquired based on detection results by detection means for detecting at least one of position, direction, attitude and movement, in a main body of said mobile communication terminal, the mobile communication terminal being **characterized by** comprising:
said external apparatus for mobile communication terminal according to claim 4; and
data reception means for receiving the detection result data transmitted from said external apparatus for mobile communication terminal by non-public communication using a flexible communication cable or wireless non-public communication, in the main body of said mobile communication terminal; wherein
said application program execution means uses detection result data and key operation signals received by said data reception means and executes a game application program that proceeds in accordance with said detection result data and said key operation signals.

9. A mobile communication terminal comprising application program execution means for executing an application program with detection result data acquired based on detection results by detection means for detecting at least one of position, direction, attitude and movement, in a main body of the mobile communication terminal, said mobile communication terminal being **characterized by** comprising:
said external apparatus for mobile communication terminal according to claim 5 or 6;
a memory card slot that a memory card can be attached to be freely attached to and removed from, in the main body of said mobile communication terminal; and
data reception means for receiving the detection result data transmitted from said external apparatus for mobile communication terminal attached to said memory card slot by wired or wireless non-public short-range communication, in the main body of said mobile communication terminal; wherein
said application program execution means executes said application program with detection result data received by said data reception means.

10. An external display system for mobile communication terminal comprising said mobile communication terminal according to claim 7, 8, or 9 and an external display device for displaying images based on image signals output from said mobile communication terminal, said external display system for mobile communication terminal being **characterized by** that said mobile communication terminal is comprised of image output means for outputting image signals for displaying screen images corresponding to contents of said application program executed by said application program execution means, to said external display device.
